# EUROPÄISCHE PATENTSCHRIFT

(11) **EP 3 940 347 B1**
(45) Veröffentlichungstag und Bekanntmachung des Hinweises auf die Patenterteilung: **14.09.2022**
(21) Anmeldenummer: 21161216.3
(22) Anmeldetag: 08.03.2021
(51) Int. Cl.: G01G 11/00

(54) **PRODUKTIONSANLAGE MIT EINER AUFTRAGEINRICHTUNG ZUM AUFTRAGEN EINES DRUCKFLUIDS AUF DIE JEWEILIGE OBERFLÄCHE VON BLECHTAFELN**
PRODUCTION PLANT WITH AN APPLICATOR FOR APPLYING A COMPRESSED FLUID TO THE RESPECTIVE SURFACE OF METAL SHEETS
INSTALLATION DE PRODUCTION DOTÉ D'UN DISPOSITIF D'APPLICATION DESTINÉ À L'APPLICATION D'UN LIQUIDE SOUS PRESSION SUR LA SURFACE RESPECTIVE DES PLAQUES EN TÔLE

(30) Priorität: 16.07.2020 DE 102020118791
(43) Veröffentlichungstag der Anmeldung: 19.01.2022
(73) Patentinhaber: Koenig & Bauer AG, 97080 Würzburg (DE)
(72) Erfinder: Behnke, Stephan, 16356 Ahrensfelde (DE); Pollok, Damian, 70378 Stuttgart (DE)
(74) Vertreter: Koenig & Bauer AG

(56) Entgegenhaltungen:
- DE-A1-102005 011 877
- DE-B3-102019 118 647
- DE-U- 1 717 925

## Beschreibung

Produktionsanlage mit einer Auftrageinrichtung zum Auftragen eines Druckfluids auf die jeweilige Oberfläche von Blechtafeln.

Die Erfindung betrifft eine Produktionsanlage mit einer Auftrageinrichtung zum Auftragen eines Druckfluids auf die jeweilige Oberfläche von Blechtafeln gemäß dem Oberbegriff des Anspruchs 1 und ein entsprechendes Verfahren gemäß dem Oberbegriff des Anspruchs 10.

Durch die DE 10 2019 118 647 B3 ist eine Produktionslinie zur Bearbeitung von Blechtafeln bekannt, wobei diese Produktionslinie eine Blechdruckmaschine und/oder eine Blechlackiermaschine aufweist, wobei mindestens eine Transportvorrichtung für den liegenden Transport der sequentiell zu transportierenden Blechtafeln vorgesehen ist. Durch die DE 17 17 925 U ist eine Blechsortiermaschine zum Sortieren von mittels eines Rollgangs aufeinanderfolgend liegend transportierten Blechtafeln nach einstellbaren Gewichtsbereichen bekannt, wobei diese Blechsortiermaschine in ihrem Rollgang inline eine Blechwaage aufweist, wobei der betreffende Gewichtsbereich einer jeden der dem Rollgang zugeführten zu sortierenden Blechtafeln in deren jeweiligem Ruhezustand von der Blechwaage einzeln selbsttätig ermittelt wird.

Durch die DE 10 2005 011 877 A1 ist ein Verfahren in einem Stapelhubwerk zur Absicherung gegen Überlastung bekannt, wobei das Stapelhubwerk beispielsweise in einem Bogenanleger oder einem Bogenausleger einer bogenverarbeitenden Maschine angeordnet ist, wobei im Stapelhubwerk Mittel zum Tragen, Anheben und Absenken eines Bogenstapels vorgesehen sind, derart dass das Stapelhubwerk Antriebselemente (Motor, Getriebe) und Last tragende Elementen (Ketten, Seile, Bänder; Stapeltragplatte) enthält und dass einer Steuerung für das Stapelhubwerk zum Anheben oder Absenken des Bogenstapels vorgesehen ist, wobei der Maschinensteuerung der bogenverarbeitenden Maschine Werte über die Dichte des zu verarbeitenden Bedruckstoffes zugeleitet werden, wobei der Maschinensteuerung weiterhin Werte über das Format des zu verarbeitenden Bedruckstoffes eingegeben werden, wobei sowohl die flächige Ausdehnung als auch die Dicke des Bedruckstoffes erfassbar sind, wobei aus den Vorgabewerten eine Grenzstapelhöhe oder eine Bogenanzahl festgelegt wird, bei der die Grenzlast eines im Bogenausleger abzustapelnden oder im Bogenanleger zu verarbeitenden Bogenstapels erreicht wird und wobei bei Erreichen der Grenzstapelhöhe oder der berechneten Bogenzahl mittels der Steuerung für das Stapelhubwerk die Bogenzufuhr zum Bogenausleger oder Bogenanleger unterbunden wird.

Der Erfindung liegt die Aufgabe zugrunde, eine Produktionsanlage mit einer Auftrageinrichtung zum Auftragen eines Druckfluids auf die jeweilige Oberfläche von Blechtafeln sowie ein entsprechendes Verfahren zu schaffen, bei denen die Masse des auf die jeweilige Oberfläche der Blechtafeln aufgetragenen Druckfluids insbesondere zu Nachweiszwecken zumindest registriert und gegebenenfalls zur Steuerung der Auftrageinrichtung verwendet wird.

Die Aufgabe wird erfindungsgemäß durch die Merkmale des Anspruchs 1 und 10 gelöst. Die jeweils abhängigen Ansprüche zeigen vorteilhafte Ausgestaltungen und/oder Weiterbildungen der gefundenen Lösung.

Die mit der Erfindung erzielbaren Vorteile bestehen insbesondere darin, dass die Masse des auf die jeweilige Oberfläche der Blechtafeln aufgetragenen Druckfluids insbesondere zu Nachweiszwecken zumindest registriert wird und gegebenenfalls die Masse des auf die jeweilige Oberfläche weiterer Blechtafeln aufzutragenden Druckfluids an der Auftrageinrichtung optimal einstellbar ist, so dass einerseits durch eine zu gering eingestellte Masse des auf die jeweilige Oberfläche der Blechtafeln aufzutragenden Druckfluids eine Produktion von Makulatur und andererseits durch eine zu großzügig eingestellte Masse des auf die jeweilige Oberfläche der Blechtafeln aufzutragenden Druckfluids eine unnötig teure und damit unwirtschaftliche Produktion vermieden werden. Die gefundene Lösung trägt dazu bei, in einer industriellen Produktionsanlage jeweils mit mindestens einem Druckfluid in einer geschlossenen Schicht zu beschichtende Blechtafeln kosteneffizient und ohne Minderung der bezüglich der Beschichtung einzuhaltenden Qualität zu produzieren.

Ein Ausführungsbeispiel der Erfindung ist in den Zeichnungen dargestellt und wird im Folgenden näher beschrieben.

Es zeigen:
- Fig. 1: eine Produktionsanlage mit einem Anleger, einer Auftrageinrichtung, einer Transporteinrichtung mit einer integrierten Waage und danach mit einem Trockner;
- Fig. 2: einen Ausschnitt aus der Produktionsanlage nach Fig. 1 mit einer Ausschleuseweiche, zwei Transportstrecken und einer Einschleuseweiche;
- Fig. 3: eine Visualisierung von mit der Waage ermittelten Messergebnissen.

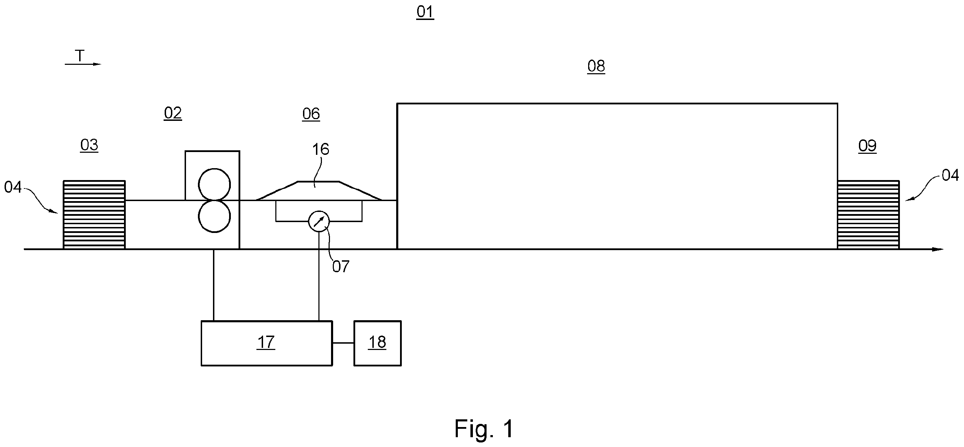

Fig. 1 zeigt schematisch und vereinfacht beispielhaft eine Produktionsanlage 01 mit einer Auftrageinrichtung 02 zum Auftragen eines Druckfluids auf die jeweilige Oberfläche von z. B. in einem Anleger 03 gestapelt bereitgestellten Blechtafeln 04 und mit einer der Auftrageinrichtung 02 in Transportrichtung T der Blechtafeln 04 nachgeordneten Transporteinrichtung 06 für den liegenden Transport von mehreren entlang eines Transportweges sequentiell, d. h. aufeinanderfolgend transportierten Blechtafeln 04. Am Anleger 03 werden die dort gestapelten und der Auftrageinrichtung 02 zuzuführenden Blechtafeln 04 also automatisch vereinzelt. Die Auftrageinrichtung 02 zum Auftragen des Druckfluids auf die jeweilige Oberfläche der Blechtafeln 04 ist vorzugsweise als eine Druckeinrichtung oder als eine Lackiereinrichtung respektive als eine Blechdruckmaschine oder als eine Blechlackiermaschine ausgebildet.

Die Blechtafeln 04 können in der gattungsgemäßen Produktionsanlage 01 einseitig, d. h. entweder nur auf ihrer Oberseite oder auf ihrer Unterseite oder beidseitig, d. h. auf ihrer Oberseite und auf ihrer Unterseite bedruckt und/oder lackiert werden. Das Auftragen des Druckfluids auf der jeweiligen Oberfläche der jeweiligen Blechtafeln 04 erfolgt z. B. in Form einer bezüglich der betreffenden Oberfläche geschlossenen Beschichtung, was insbesondere im Fall des Auftragens einer Grundierung und/oder Schutzlackierung zutrifft. Bei diesem Beschichtungsvorgang ist zu vermeiden, dass durch eine an der Auftrageinrichtung 02 zu gering eingestellte Masse des auf die jeweilige Oberfläche der Blechtafeln 04 aufzutragenden Druckfluids Makulatur produziert wird. Denn eine an der Auftrageinrichtung 02 zu gering eingestellte Masse des auf die jeweilige Oberfläche der Blechtafeln 04 aufzutragenden Druckfluids kann zur Folge haben, dass die betreffende Oberfläche der Blechtafeln 04 in ihrer Beschichtung Löcher und/oder Fehlstellen aufweist. Andererseits ist es das Bestreben jedes Betreibers einer gattungsgemäßen Produktionsanlage 01, durch eine an der Auftrageinrichtung 02 zu großzügig eingestellte Masse des auf die jeweilige Oberfläche der Blechtafeln 04 aufzutragenden Druckfluids eine unnötig teure und damit unwirtschaftliche Produktion zu vermeiden. Es wird daher angestrebt, einerseits die Verwendung von der genau richtigen Masse des auf die jeweilige Oberfläche der Blechtafeln 04 aufzutragenden Druckfluids nachzuweisen und gegebenenfalls in einem automatisierten Steuerungsprozess an der Auftrageinrichtung 02 genau diejenige Masse des auf die jeweilige Oberfläche der Blechtafeln 04 aufzutragenden Druckfluids einzustellen, die zur Einhaltung der bezüglich der Beschichtung beabsichtigten Qualität erforderlich ist. Hierzu wird in einer bevorzugten Ausführung der gattungsgemäßen Produktionsanlage 01 inline ein Optimierungsprozess durchgeführt.

Zur Durchführung dieses Optimierungsprozesses weist die Transporteinrichtung 06 erfindungsgemäß eine im Transportweg der Blechtafeln 04 angeordnete Waage 07 zum Messen der jeweiligen Masse dieser Blechtafeln 04 auf, wobei die Waage 07 die Masse der Blechtafeln 04 mitsamt dem auf ihrer jeweiligen Oberfläche aufgetragenen Druckfluid messend oder nur die Masse des auf die jeweilige Oberfläche aufgetragenen Druckfluids ermittelnd und jeweils ihr gemessenes oder ermitteltes Ergebnis zumindest an eine vorzugsweise digitale Steuereinrichtung 17 und/oder an die Auftrageinrichtung 02 meldend ausgebildet ist. Mit dieser Meldung des gemessenen oder ermittelten Ergebnisses, d. h. eines Wertes für die mit der Waage 07 gemessenen Masse der jeweiligen Blechtafel 04 oder für die ermittelte Masse nur des auf die jeweilige Oberfläche aufgetragenen Druckfluids jeweils z. B. an die betreffende Steuereinrichtung 17 kann z. B. eine Dosiereinrichtung der Auftrageinrichtung 02 bezüglich der aufzutragenden Masse an Druckfluid automatisiert, d. h. insbesondere von der Steuereinrichtung 17 gesteuert und dadurch optimal eingestellt werden. Die Auftrageinrichtung 02 zum Auftragen des Druckfluids auf die jeweilige Oberfläche der jeweils liegend transportierten Blechtafeln 04 ist in Transportrichtung T der Blechtafeln 04 unmittelbar vor der Waage 07 angeordnet, so dass die Masse der betreffenden Blechtafeln 04 in deren "nassen", d. h. druckfeuchten Zustand gemessen wird. Der dadurch gegebene kurze Weg zwischen dem Ort des Auftragens des Druckfluids und dem Ort des Wiegens der betreffenden derart beschichteten Blechtafeln 04 stellt sicher, dass die Masse des aufgetragenen Druckfluids vergleichsweise unverfälscht ermittelt werden kann, da auf diesem kurzen Transportweg z. B. ein im Druckfluid enthaltenes Lösemittel kaum Gelegenheit hat zu verdunsten. Die Waage 07 ist vorzugsweise derart ausgebildet, dass sie die jeweilige Masse dieser jeweils ein aufgetragenes Druckfluid aufweisenden Blechtafeln 04 jeweils in deren Ruhezustand misst. Der Ruhezustand einer mit der Waage 07 zu wiegenden Blechtafel 04 wird z. B. durch mindestens einen in der Transporteinrichtung 06 im Transportweg der zu transportierenden Blechtafeln 04 angeordneten z. B. mechanischen Anschlag 16 sichergestellt, an welchen die betreffende mit der Transporteinrichtung 06 transportierte Blechtafel 04 mit mindestens einer ihrer Kanten anschlägt und dadurch aus ihrer Bewegung abgebremst wird. Durch den mindestens einen Anschlag 16 wird die betreffende bzw. jede zu wiegende Blechtafel 04 auch in eine definierte Position gebracht und dort z. B. während des Wiegevorgangs gehalten. Die Waage 07 verwendet für die Messung bzw. Ermittlung der jeweiligen Masse z. B. ein gravimetrisches Messverfahren oder ein berührungsloses Messverfahren, welches durch den Einsatz mindestens eines entsprechenden Sensors z. B. ein optisches oder ein kapazitives oder ein induktives Verfahren verwendet. Als Messverfahren kann auch ein eine Infrarot-Strahlung verwendendes Verfahren oder ein interferometrisches Messverfahren zur Anwendung kommen.

In einer bevorzugten Ausgestaltung der Produktionsanlage 01 ist in Transportrichtung T der Blechtafeln 04 nach der Waage 07 ein z. B. als ein Durchlauftrockner ausgebildeter Trockner 08 zum Trocknen des auf die jeweilige Oberfläche der Blechtafeln 04 aufgetragenen Druckfluids angeordnet. Der Trockner 08 ist z. B. als ein Heißlufttrockner ausgebildet, gegebenenfalls in Kombination mit einer Trocknung durch eine Bestrahlung mit Infrarotlicht oder UV-Licht. Die Blechtafeln 04 werden in ihrer Transportrichtung T nach der Waage 07 bzw. nach dem Trockner 08 vorzugsweise in einer Stapeleinrichtung 09 wieder gestapelt abgelegt.

In einer gattungsgemäßen Produktionsanlage 01 werden in einem bestimmten Produktionsprozess üblicherweise nur in ihren jeweiligen Abmessungen und in ihrem jeweiligen Werkstoff gleiche Blechtafeln 04 jeweils mit einer Auftrageinrichtung 02 durch Auftragen mindestens eines Druckfluids mit einer Beschichtung versehen, so dass das Gewicht bzw. die Masse einer unbeschichteten Blechtafel 04 z. B. durch eine vor Ausführung des Produktionsprozesses vorgenommene Messung der Masse von mindestens einer Blechtafel 04 ermittelt werden und/oder aus einer zu dieser Art von Blechtafel 04 gehörenden Spezifikation entnommen und als vorbekannt vorausgesetzt werden kann. Die Waage 07 ist z. B. derart ausgebildet, dass sie selbst oder die Steuereinrichtung 17 jeweils bezüglich der zu wiegenden Blechtafeln 04 eine Differenz zwischen deren beschichteten Zustand und deren unbeschichteten Zustand ermittelt und dann lediglich den Wert dieser Differenz, d. h. ihr gemessenes oder ermitteltes Ergebnis für die Masse des auf die Oberfläche der jeweiligen Blechtafel 04 aufgetragenen Druckfluids registriert, wobei Registrieren hier bedeutet, die betreffende Masse messend oder ermittelnd zu erfassen und dieses Ergebnis in einem vorzugsweise mit der Waage 07 und/oder mit der Steuereinrichtung 17 und/oder mit der Auftrageinrichtung 02 jeweils zumindest datentechnisch verbundenen Speicher zu speichern.

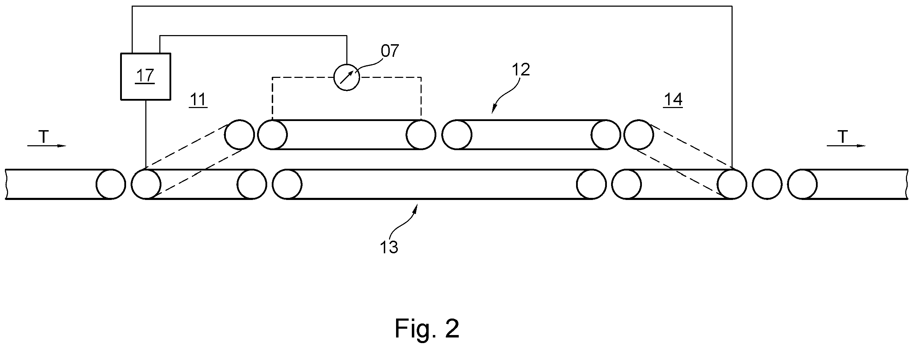

Eine sehr vorteilhafte Ausbildung der gattungsgemäßen Produktionsanlage 01 ist in einem Ausschnitt in der Fig. 2 dargestellt und sieht vor, dass in Transportrichtung T der Blechtafeln 04 nach der Auftrageinrichtung 02 und vor der Waage 07 eine Ausschleuseweiche 11 angeordnet ist, wobei die Transporteinrichtung 06 in Transportrichtung T der Blechtafeln 04 nach der Ausschleuseweiche 11 zwei Transportstrecken 12; 13 aufweist, wobei die Ausschleuseweiche 11 mindestens eine Blechtafel 04 z. B. von der Steuereinrichtung 17 gesteuert, vorzugsweise programmgesteuert wahlweise der einen Transportstrecke 12 oder der anderen Transportstrecke 13 zuführend ausgebildet ist, wobei die Waage 07 in einer der beiden Transportstrecken 12; 13 angeordnet ist. Dabei sind die beiden Transportstrecken 12; 13 vorzugsweise parallel zueinander verlaufend angeordnet. Während mindestens eine Blechtafel 04 aus dem Strom der durch die Produktionsanlage 01 geführten Blechtafeln 04 ausgeschleust und der Transportstrecke 12 mit der Waage 07 zugeführt wird, werden weitere in dem Strom geführte Blechtafeln 04 entlang der Transportstrecke 13 mit der aktuellen Produktionsgeschwindigkeit weiter transportiert. In Transportrichtung T der Blechtafeln 04 kann nach der Waage 07 eine Einschleuseweiche 14 angeordnet sein, wobei die Einschleuseweiche 14 eine auf der Waage 07 gewogene Blechtafel 04 der jeweils anderen Transportstrecke 12; 13 wiederum z. B. von der Steuereinrichtung 17 gesteuert, vorzugsweise programmgesteuert zuführend ausgebildet ist. In der Ausführungsvariante der gattungsgemäßen Produktionsanlage 01 mit einer Einschleuseweiche 14 ist in Transportrichtung T der Blechtafeln 04 nach der Waage 07 und vor der Einschleuseweiche 14 in der Transporteinrichtung 06 eine Warteposition für die mindestens eine wieder einzuschleusende Blechtafel 04 vorgesehen, wobei die betreffende wieder in den Strom von sequentiell transportierten Blechtafeln 04 einzuschleusende Blechtafel 04 zunächst aus ihrem Ruhezustand an der Waage 07 mittels der Transporteinrichtung 06 in die Warteposition überführt wird und dann aus dieser Warteposition wiederum mittels der Transporteinrichtung 06 beschleunigt wird, sobald die Einschleuseweiche 14 betätigt wird und zur Einschleusung dieser wieder einzuschleusenden Blechtafel 04 bereit ist.

Der Optimierungsprozess läuft in der gattungsgemäßen Produktionsanlage 01 inline nun z. B. folgendermaßen ab.

Zunächst erfolgt ein Referenzieren der Waage 07. Zu diesem Zweck wird eine unbedruckte und/oder unlackierte Blechtafel 04 z. B. entweder dem Stapel der z. B. am Anleger 03 bereitgestellten Blechtafeln 04 entnommen oder aus dem Strom der durch die Produktionsanlage 01 geführten Blechtafeln 04 ausgeschleust und sodann jeweils gewogen. Mit dieser Messung ergibt sich ein Referenzwert m0 für eine unbedruckte und/oder unlackierte Blechtafel 04, wobei dieser Referenzwert m0 insbesondere in der zur Produktionsanlage 01 gehörenden Steuereinrichtung 17 gespeichert wird. Vorzugsweise wird der Referenzwert m0 z. B. von der Steuereinrichtung 17 als ein Mittelwert aus mehreren gleichartigen, in einer selben Produktion zu beschichtenden Blechtafeln 04 ermittelt, wobei mehrere, z. B. fünf, zehn oder mehr unbedruckte und/oder unlackierte Blechtafeln 04 vorzugsweise auf der Waage 07 gewogen werden. In einer anschließend ausgeführten Produktion wird dann mittels der Waage 07 die Masse mindestens einer mittels der Auftrageinrichtung 02 bedruckten und/oder lackierten Blechtafel 04 z. B. gemessen, wobei dieses Messergebnis einen Wert für das sogenannte Tafelgewicht m1 der betreffenden Blechtafel 04 bildet. Die vorzugsweise von der Steuereinrichtung 17 ermittelte Differenz zwischen dem Tafelgewicht m1 der betreffenden Blechtafel 04 und dem zu dieser Blechtafel 04 gehörenden Referenzwert m0 ist das sogenannte Nasslackgewicht Δm. Zu diesem Nasslackgewicht Δm werden vorzugsweise in der Steuereinrichtung 17 in der Praxis vorzugsweise zwei Toleranzwerte in Form eines unteren Schrankenwertes mmin und eines oberen Schrankenwertes mmax festgelegt. Entsprechend dieser getroffenen Festlegung kann insbesondere von der Steuereinrichtung 17 z. B. die Dosiereinrichtung der Auftrageinrichtung 02 bezüglich der auf die Blechtafeln 04 jeweils aufzutragenden Masse an Druckfluid automatisiert in Abhängigkeit von der Meldung des mit der Waage 07 gemessenen oder ermittelten Ergebnisses an die betreffende Steuereinrichtung 17 derart eingestellt werden, dass in der Produktionsanlage 01 in der Produktion nachfolgend, d. h. nach der vorangegangenen Meldung ermittelte z. B. mit einem Laufindex i versehene Nasslackgewichte Δmi innerhalb eines durch den unteren Schrankenwert mmin und den oberen Schrankenwert mmax festgelegten Wertebereiches liegen. Die Toleranzwerte können z. B. jeweils auch als eine Absolutwertabweichung vom Referenzwert m0 angegeben werden.

Beispielsweise kann vorgesehen sein, dass eine bestimmte Produktion darin besteht, in der gattungsgemäßen Produktionsanlage 01 eine Auflage von z. B. 5.000 Blechtafeln 04 zu lackieren. Vor Aufnahme dieser Produktion wurde ermittelt, dass eine unlackierte Blechtafel 04 zumindest im Mittel jeweils z. B. 500 g wiegt. Der in diesem Beispiel in der Steuereinrichtung 17 zu setzende Referenzwert m0 beträgt somit 500 g. Der Referenzwert m0 wurde z. B. von der Steuereinrichtung 17 z. B. als ein Mittelwert aus einer bestimmten Anzahl von unlackierten Blechtafeln 04 ermittelt. Für diese Produktion wurden in der Steuereinrichtung 17 ein unterer Schrankenwert mmin von z. B. 5 g Abweichung vom Referenzwert m0 und ein oberer Schrankenwert mmax von z. B. 10 g Abweichung vom Referenzwert m0 festgelegt oder aus einer Menge von vorgegebenen Werten ausgewählt, um die in dieser Produktion im Beschichtungsprozess gewünschte Qualität zu gewährleisten. Während der Produktion, d. h. während der Abarbeitung der Auflage werden fortlaufend oder vorzugsweise jeweils nach der Abarbeitung einer bestimmten Anzahl von Blechtafeln 04 eine oder mehrere Blechtafeln 04 an der Waage 07 gewogen. Aus der beispielhaft genannten Auflage von 5.000 Blechtafeln 04 werden im Laufe der Produktion mehrere, z. B. neun Blechtafeln 04 ausgeschleust und jeweils gewogen. Dabei werden beispielhaft folgende Messergebnisse ermittelt:

| Index i | mi (nasslackierte Blechtafel [g]) | Δmi = mi - m0 (Nasslackqewicht [g]) |
|---|---|---|
| 500 | 504 | 4 |
| 1.200 | 507 | 7 |
| 1.750 | 506 | 6 |
| 2.400 | 508 | 8 |
| 3.200 | 506 | 6 |
| 3.600 | 511 | 11 |
| 3.900 | 506 | 6 |
| 4.500 | 504 | 4 |
| 5.000 | 508 | 8 |

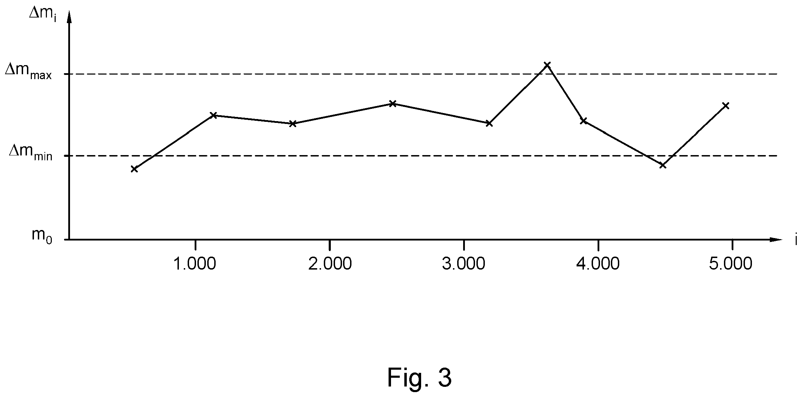

Fig. 3 zeigt eine Visualisierung der vorstehenden Beispielwerte z. B. an einer zur Produktionsanlage 01 gehörenden, z. B. mit der Steuereinrichtung 17 zumindest datentechnisch verbundenen Anzeigeeinrichtung 18 (Fig. 1). In einer bevorzugten Ausgestaltung der gattungsgemäßen Produktionsanlage 01 wird z. B. von der Steuereinrichtung 17 und/oder von der Anzeigeeinrichtung 18 ein visuelles und/oder akustisches Signal ausgegeben, wenn sich ein während der laufenden Produktion ermitteltes Nasslackgewicht Δmi außerhalb des durch die festgelegten Schrankenwerte mmin; mmax definierten Wertebereiches befindet. In dem vorgenannten Beispiel ist dies für die Blechtafeln 04 mit dem Index i=500, i=3.600 und i=4.500 der Fall.

Damit wird ein Verfahren zum Einstellen einer in einer Produktionsanlage 01 angeordneten Auftrageinrichtung 02 zum Auftragen eines Druckfluids auf die jeweilige Oberfläche von Blechtafeln 04 ausgeführt, bei dem mehrere dieser Blechtafeln 04 mit einer der Auftrageinrichtung 02 nachgeordneten Transporteinrichtung 06 aufeinanderfolgend liegend entlang eines Transportweges transportiert werden, wobei die jeweilige Masse dieser Blechtafeln 04 mit einer im Transportweg der Blechtafeln 04 in der Transporteinrichtung 06 angeordneten Waage 07 gemessen wird, wobei die Waage 07 die Masse der Blechtafeln 04 mitsamt dem auf ihrer jeweiligen Oberfläche aufgetragenen Druckfluid misst oder nur die Masse des auf die jeweilige Oberfläche aufgetragenen Druckfluids ermittelt, wobei die Waage 07 ihr gemessenes oder ermitteltes Ergebnis jeweils an eine zur Produktionsanlage 01 gehörende Steuereinrichtung 17 und/oder an die Auftrageinrichtung 02 meldet.

### Bezugszeichenliste

- 01: Produktionsanlage
- 02: Auftrageinrichtung
- 03: Anleger
- 04: Blechtafel
- 05: -
- 06: Transporteinrichtung
- 07: Waage
- 08: Trockner
- 09: Stapeleinrichtung
- 10: -
- 11: Ausschleuseweiche
- 12: Transportstrecke
- 13: Transportstrecke
- 14: Einschleuseweiche
- 15: -
- 16: Anschlag
- 17: Steuereinrichtung
- 18: Anzeigeeinrichtung

- i: Laufindex
- m0: Referenzwert
- mi: Masse einer Blechtafel mit aufgetragenem Druckfluid
- Δm; Δmi: Nasslackgewicht
- mmin: unterer Schrankenwert
- mmax: oberer Schrankenwert
- T: Transportrichtung

## Patentansprüche

1. Produktionsanlage (01) mit einer Auftrageinrichtung (02) zum Auftragen eines Druckfluids auf die jeweilige Oberfläche von Blechtafeln (04) und mit einer der Auftrageinrichtung (02) nachgeordneten Transporteinrichtung (06) für den liegenden Transport von mehreren entlang eines Transportweges aufeinanderfolgend transportierten Blechtafeln (04), **dadurch gekennzeichnet, dass** die Transporteinrichtung (06) eine im Transportweg der Blechtafeln (04) angeordnete Waage (07) zum Messen der jeweiligen Masse dieser Blechtafeln (04) aufweist, wobei die Waage (07) die Masse der Blechtafeln (04) mitsamt dem auf ihrer jeweiligen Oberfläche aufgetragenen Druckfluid messend oder nur die Masse des auf die jeweilige Oberfläche aufgetragenen Druckfluids ermittelnd ausgebildet ist, wobei die Waage (07) ihr gemessenes oder ermitteltes Ergebnis jeweils an eine zur Produktionsanlage (01) gehörende Steuereinrichtung (17) und/oder an die Auftrageinrichtung (02) meldend ausgebildet ist.

2. Produktionsanlage (01) nach Anspruch 1, **dadurch gekennzeichnet, dass** die Auftrageinrichtung (02) zum Auftragen des Druckfluids auf die jeweilige Oberfläche der Blechtafeln (04) als eine Druckeinrichtung oder als eine Lackiereinrichtung ausgebildet ist.

3. Produktionsanlage (01) nach Anspruch 1 oder 2, **dadurch gekennzeichnet, dass** in Transportrichtung (T) der Blechtafeln (04) nach der Waage (07) ein Trockner (08) zum Trocknen des auf die jeweilige Oberfläche der Blechtafeln (04) aufgetragenen Druckfluids angeordnet ist.

4. Produktionsanlage (01) nach Anspruch 1 oder 2 oder 3, **dadurch gekennzeichnet, dass** die Waage (07) ihr gemessenes oder ermitteltes Ergebnis zumindest für die Masse des auf die Oberfläche der jeweiligen Blechtafel (04) aufgetragenen Druckfluids registrierend ausgebildet ist.

5. Produktionsanlage (01) nach Anspruch 1 oder 2 oder 3 oder 4, **dadurch gekennzeichnet, dass** die Waage (07) die jeweilige Masse dieser jeweils ein aufgetragenes Druckfluid aufweisenden Blechtafeln (04) jeweils in deren Ruhezustand messend ausgebildet ist.

6. Produktionsanlage (01) nach Anspruch 5, **dadurch gekennzeichnet, dass** im Transportweg der zu transportierenden Blechtafeln (04) mindestens ein Anschlag (16) vorgesehen ist, wobei jede zu wiegende Blechtafel (04) während des Wiegevorgangs auf der Waage (07) durch den mindestens einen Anschlag (16) in einer definierten Position gehalten ist.

7. Produktionsanlage (01) nach Anspruch 1 oder 2 oder 3 oder 4 oder 5 oder 6, **dadurch gekennzeichnet, dass** in Transportrichtung (T) der Blechtafeln (04) nach der Auftrageinrichtung (02) und vor der Waage (07) eine Ausschleuseweiche (11) angeordnet ist, wobei die Transporteinrichtung (06) in Transportrichtung (T) der Blechtafeln (04) nach der Ausschleuseweiche (11) zwei Transportstrecken (12; 13) aufweist, wobei die Ausschleuseweiche (11) mindestens eine Blechtafel (04) durch die Steuereinrichtung (17) gesteuert der einen Transportstrecke (12) oder der anderen Transportstrecke (13) zuführend ausgebildet ist, wobei die Waage (07) in einer der beiden Transportstrecken (12; 13) angeordnet ist.

8. Produktionsanlage (01) nach Anspruch 7, **dadurch gekennzeichnet, dass** die beiden Transportstrecken (12; 13) parallel zueinander verlaufend angeordnet sind.

9. Produktionsanlage (01) nach Anspruch 7 oder 8, **dadurch gekennzeichnet, dass** in Transportrichtung (T) der Blechtafeln (04) nach der Waage (07) eine Einschleuseweiche (14) angeordnet ist, wobei die Einschleuseweiche (14) eine auf der Waage (07) gewogene Blechtafel (04) der anderen Transportstrecke (12; 13) zuführend ausgebildet ist.

10. Verfahren zum Einstellen einer in einer Produktionsanlage (01) angeordneten Auftrageinrichtung (02) zum Auftragen eines Druckfluids auf die jeweilige Oberfläche von Blechtafeln (04), wobei mehrere dieser Blechtafeln (04) mit einer der Auftrageinrichtung (02) nachgeordneten Transporteinrichtung (06) aufeinanderfolgend liegend entlang eines Transportweges transportiert werden, **dadurch gekennzeichnet, dass** die jeweilige Masse dieser Blechtafeln (04) mit einer im Transportweg der Blechtafeln (04) in der Transporteinrichtung (06) angeordneten Waage (07) gemessen wird, wobei die Waage (07) die Masse der Blechtafeln (04) mitsamt dem auf ihrer jeweiligen Oberfläche aufgetragenen Druckfluid misst oder nur die Masse des auf die jeweilige Oberfläche aufgetragenen Druckfluids ermittelt, wobei die Waage (07) ihr gemessenes oder ermitteltes Ergebnis jeweils an eine zur Produktionsanlage (01) gehörende Steuereinrichtung (17) und/oder an die Auftrageinrichtung (02) meldet.

11. Verfahren nach Anspruch 10, **dadurch gekennzeichnet, dass** vor dem Auftragen des Druckfluids mindestens eine der betreffenden Blechtafeln (04) gewogen wird, wobei das derart gemessene oder ermittelte Ergebnis in der zur Produktionsanlage (01) gehörenden Steuereinrichtung (17) als ein Referenzwert (m0) gesetzt wird, wobei in einer anschließend ausgeführten Produktion mittels der Waage (07) die jeweilige Masse (mi) von mindestens einer der jeweils mittels der Auftrageinrichtung (02) mit dem Druckfluid versehenen Blechtafeln (04) gemessen wird, wobei von der Steuereinrichtung (17) ein Nasslackgewicht (Δmi) in Form einer Differenz zwischen dem Referenzwert (m0) und der jeweils gemessenen Masse (mi) von mindestens einer der jeweils mit dem Druckfluid versehenen Blechtafeln (04) ermittelt wird.

12. Verfahren nach Anspruch 11, **dadurch gekennzeichnet, dass** in der Steuereinrichtung (17) für das Nasslackgewicht (Δmi) ein unterer Schrankenwert (mmin) und ein oberer Schrankenwert (mmax) festgelegt werden, wobei die Auftrageinrichtung (02) bezüglich der auf die Blechtafeln (04) jeweils aufzutragenden Masse an Druckfluid in Abhängigkeit von der Meldung des mit der Waage (07) gemessenen oder ermittelten Ergebnisses derart eingestellt wird, dass in der Produktionsanlage (01) in der laufenden Produktion nach der vorangegangenen Meldung ermittelte Nasslackgewichte (Δmi) innerhalb eines durch den unteren Schrankenwert (mmin) und den oberen Schrankenwert (mmax) festgelegten Wertebereiches liegen.

13. Verfahren nach Anspruch 11 oder 12, **dadurch gekennzeichnet, dass** während der Produktion ermittelte Nasslackgewichte (Δmi) an einer mit der Steuereinrichtung (17) zumindest datentechnisch verbundenen Anzeigeeinrichtung (18) visualisiert werden.

14. Verfahren nach Anspruch 12 oder 13, **dadurch gekennzeichnet, dass** von der Steuereinrichtung (17) und/oder von der Anzeigeeinrichtung (18) ein visuelles und/oder akustisches Signal ausgegeben wird bzw. werden, wenn sich ein ermitteltes Nasslackgewicht (Δmi) außerhalb des durch die festgelegten Schrankenwerte (mmin; mmax) definierten Wertebereiches befindet.

15. Verfahren nach Anspruch 10 oder 11 oder 12 oder 13 oder 14, **dadurch gekennzeichnet, dass** das mit der Auftrageinrichtung (02) vorgenommene Auftragen des Druckfluids einseitig oder beidseitig auf der jeweiligen Oberfläche der jeweiligen Blechtafeln (04) jeweils in Form einer bezüglich der betreffenden Oberfläche geschlossenen Beschichtung erfolgt.

## Claims

1. A production plant (01) with an applicator (02) for applying a compressed fluid to the respective surface of metal sheets (04) and with a transport device (06) downstream of the applicator (02) for the lying transport of a plurality of metal sheets (04) transported along a transport path one after the other, **characterized in that** the transport device (06) has a scale (07) for measuring the respective mass of these metal sheets (04) arranged in the transport path of the metal sheets (04), wherein the scale (07) is configured measuring the mass of the metal sheets (04) together with the compression fluid applied to their respective surface or only determining the mass of the compression fluid applied to the respective surface, wherein the scale (07) is configured reporting its measured or determined result respectively to a control device (17) belonging to the production plant (01) and/or to the applicator (02).

2. The production plant (01) according to claim 1, **characterized in that** the applicator (02) for applying the compressed fluid to the respective surface of the metal sheets (04) is configured as a printing device or as a lacquer application device.

3. The production plant (01) according to claim 1 or 2, **characterized in that** a dryer (08) for drying the compressed fluid applied to the respective surface of the metal sheets (04) is arranged downstream of the scale (07) in the transport direction (T) of the metal sheets (04).

4. The production plant (01) according to claim 1 or 2 or 3, **characterized in that** the scale (07) is configured registering its measured or determined result at least for the mass of the compressed fluid applied to the surface of the respective metal sheets (04).

5. The production plant (01) according to claim 1 or 2 or 3 or 4, **characterized in that** the scale (07) is configured measuring the respective mass of the metal sheets (04) respectively having an applied compressed fluid respectively in their idle state.

6. The production plant (01) according to claim 5, **characterized in that** at least one stop (16) is provided in the transport path of the metal sheets (04) to be transported, wherein each metal sheet (04) to be weighed is held by the at least one stop (16) in a defined position on the scale (07) during the weighing process.

7. The production plant (01) according to claim 1 or 2 or 3 or 4 or 5 or 6, **characterized in that** an unloading switch (11) is arranged in the transport direction (T) of the metal sheets (04) downstream of the applicator (02) and upstream of the scale (07), wherein the transport device (06) has two transport lines (12; 13) in the transport direction (T) of the metal sheets (04) downstream of the unloading switch (11), wherein the unloading switch (11) is configured feeding at least one metal sheet (04) controlled by the control device (17) of the one transport line (12) or the other transport line (13), wherein the scale (07) is arranged in one of the two transport lines (12; 13).

8. The production plant (01) according to claim 7, **characterized in that** the two transport lines (12; 13) are arranged running parallel to each other.

9. The production plant (01) according to claim 7 or 8, **characterized in that** a loading switch (14) is arranged in the transport direction (T) of the metal sheets (04) downstream of the scale (07), wherein the loading switch (14) is configured feeding a metal sheet (04) weighed on the scale (07) to the other transport line (12; 13).

10. A method for setting an applicator (02) arranged in a production plant (01) to apply a compression fluid to the respective surface of metal sheets (04), wherein a plurality of these metal sheets (04) are transported with a transport device (06) upstream of the applicator (02) lying one after the other along a transport path, **characterized in that** the respective mass of these metal sheets (04) is measured with a scale (07) arranged in the transport device (06) in the transport path of the metal sheets (04), wherein the scale (07) measures the mass of the metal sheets (04) together with the mass of the compressed fluid applied to the respective surface or only determines the mass of the compressed fluid applied to the respective surface, wherein the scale (07) reports its measured or determined result respectively to a control device (17) belonging to the production plant (01) and/or to the applicator (02).

11. The method according to claim 10, **characterized in that** prior to the application of the compressed fluid at least one of the relevant metal sheets (04) is weighed, wherein the result thus measured or determined is set as a reference value (m0) in the control device (17) belonging to the production plant (01), wherein in a subsequently executed production the respective mass (mi) of at least one of the respective metal sheets (04) provided with the compressed fluid by means of the applicator (02) is measured by means of the scale (07), wherein a wet paint weight (Δmi) in the form of a difference between the reference value (m0) and the respective measured mass (mi) of at least one of the respective metal sheets (04) provided with the compressed fluid is determined by the control device (17).

12. The method according to claim 11, **characterized in that** a lower threshold value (mmin) and an upper threshold value (mmax) are specified for the wet paint weight (Δmi) in the control device (17), wherein the applicator (02) is set with respect to the mass of compressed fluid to be applied on the metal sheets (04) depending on the report of the result measured or determined with the scale (07) such that the wet paint weights (Δmi) determined in the production plant (01) in the running production according to the preceding report lie within a value range specified by the lower threshold value (mmin) and the upper threshold value (mmax).

13. The method according to claim 11 or 12, **characterized in that** wet paint weights (Δmi) determined during the production are visualized on a display device (18) connected to the control device (17) at least for the purpose of data exchange.

14. The method according to claim 12 or 13, **characterized in that** a visual and/or acoustic signal is or are output by the control device (17) and/or by the display device (18), when a determined wet paint weight (Δmi) lies outside of the value range defined by the specified threshold values (mmin; mmax).

15. The method according to claim 10 or 11 or 12 or 13 or 14, **characterized in that** the application of the compressed fluid performed with the applicator (02) occurs on one or on both sides on the respective surface of the respective metal sheets (04) in each case in the form of a closed coating with respect to the relevant surface.

## Revendications

1. Installation de production (01) avec un système d'application (02) pour appliquer un fluide sous pression sur la surface respective de plaques en tôle (04) et avec un système de transport (06) monté en aval du système d'application (02) pour le transport couché de plusieurs plaques en tôle (04) transportées les unes à la suite des autres le long d'une voie de transport, **caractérisée en ce que** le système de transport (06) présente une balance (07) disposée dans la voie de transport des plaques en tôle (04) pour mesurer la masse respective de ces plaques en tôle (04), dans laquelle la balance (07) est réalisée de manière à mesurer la masse des plaques en tôle (04) avec le fluide sous pression appliqué sur leur surface respective ou de manière à déterminer seulement la masse du fluide sous pression appliqué sur la surface respective, dans laquelle la balance (07) est réalisée de manière à notifier son résultat mesuré ou déterminé respectivement à un système de commande (17) faisant partie de l'installation de production (01) et/ou au système d'application (02).

2. Installation de production (01) selon la revendication 1, **caractérisée en ce que** le système d'application (02) pour appliquer le fluide sous pression sur la surface respective des plaques en tôle (04) est réalisé sous la forme d'un système d'impression ou sous la forme d'un système de vernissage.

3. Installation de production (01) selon la revendication 1 ou 2, **caractérisée en ce qu'**un sécheur (08) pour sécher le fluide sous pression appliqué sur la surface respective des plaques en tôle (04) est disposé dans la direction de transport (T) des plaques en tôle (04) après la balance (07).

4. Installation de production (01) selon la revendication 1 ou 2 ou 3, **caractérisée en ce que** la balance (07) est réalisée de manière à enregistrer son résultat mesuré ou déterminé au moins pour la masse du fluide sous pression appliqué sur la surface des plaques en tôle (04) respectives.

5. Installation de production (01) selon la revendication 1 ou 2 ou 3 ou 4, **caractérisée en ce que** la balance (07) est réalisée de manière à mesurer la masse respective de ces plaques en tôle (04) présentant respectivement un fluide sous pression appliqué respectivement dans l'état de repos de celles-ci.

6. Installation de production (01) selon la revendication 5, **caractérisée en ce qu'**au moins une butée (16) est prévue dans la voie de transport des plaques en tôle (04) à transporter, dans laquelle chaque plaque en tôle (04) à peser est retenue dans une position définie pendant le processus de pesage sur la balance (07) par la au moins une butée (16).

7. Installation de production (01) selon la revendication 1 ou 2 ou 3 ou 4 ou 5 ou 6, **caractérisée en ce qu'**un aiguillage d'évacuation (11) est disposé dans la direction de transport (T) des plaques en tôle (04) après le système d'application (02) et avant la balance (07), dans laquelle le système de transport (06) présente dans la direction de transport (T) des plaques en tôle (04) après l'aiguillage d'évacuation (11) deux parcours de transport (12 ; 13), dans laquelle l'aiguillage d'évacuation (11) est réalisé de manière à amener au moins une plaque en tôle (04) de manière commandée par le système de commande (17) à l'un des parcours de transport (12) ou à l'autre parcours de transport (13), dans laquelle la balance (07) est disposée dans un des deux parcours de transport (12 ; 13).

8. Installation de production (01) selon la revendication 7, **caractérisée en ce que** les deux parcours de transport (12 ; 13) sont disposés de manière à s'étendre parallèlement l'un à l'autre.

9. Installation de production (01) selon la revendication 7 ou 8, **caractérisée en ce qu'**un aiguillage d'entrée (14) est disposé dans la direction de transport (T) des plaques en tôle (04) après la balance (07), dans laquelle l'aiguillage d'entrée (14) est réalisé de manière à amener une plaque en tôle (04) pesée sur la balance (07) à l'autre parcours de transport (12 ; 13) .

10. Procédé pour régler un système d'application (02) disposé dans une installation de production (01) pour appliquer un fluide sous pression sur la surface respective de plaques en tôle (04), dans lequel plusieurs de ces plaques en tôle (04) sont transportées le long d'une voie de transport de manière couchée les unes à la suite des autres avec un système de transport (06) monté en aval du système d'application (02), **caractérisé en ce que** la masse respective de ces plaques en tôle (04) est mesurée avec une balance (07) disposée dans la voie de transport des plaques en tôle (04) dans le système de transport (06), dans lequel la balance (07) mesure la masse des plaques en tôle (04) avec le fluide sous pression appliqué sur leur surface respective ou détermine seulement la masse du fluide sous pression appliqué sur la surface respective, dans lequel la balance (07) notifie son résultat mesuré ou déterminé respectivement à un système de commande (17) faisant partie de l'installation de production (01) et/ou au système d'application (02).

11. Procédé selon la revendication 10, **caractérisé en ce qu'**avant l'application du fluide sous pression au moins une des plaques en tôle (04) concernées est pesée, dans lequel le résultat mesuré ou déterminé de la sorte est placé dans le système de commande (17) faisant partie de l'installation de production (01) en tant que valeur de référence (m0), dans lequel dans une production exécutée ensuite la masse (mi) respective d'au moins une des plaques en tôle (04) pourvues du fluide sous pression respectivement au moyen du système d'application (02) est mesurée au moyen de la balance (07), dans lequel un poids de vernis humide (Δmi) sous forme d'une différence entre la valeur de référence (m0) et la masse (mi) respectivement mesurée d'au moins une des plaques en tôle (04) pourvues respectivement du fluide sous pression est déterminé par le système de commande (17).

12. Procédé selon la revendication 11, **caractérisé en ce qu'**une valeur de seuil inférieure (mmin) et une valeur de seuil supérieure (mmax) sont fixées dans le système de commande (17) pour le poids de vernis humide (Δmi), dans lequel le système d'application (02) est réglé en ce qui concerne la masse de fluide sous pression respectivement à appliquer sur les plaques en tôle (04) en fonction de la notification du résultat mesuré ou déterminé avec la balance (07), de telle sorte que dans l'installation de production (01) dans la production en cours les poids de vernis humide (Δmi) déterminés après la notification précédente se situent à l'intérieur d'une plage de valeurs fixée par la valeur de seuil inférieure (mmin) et la valeur de seuil supérieure (mmax).

13. Procédé selon la revendication 11 ou 12, **caractérisé en ce que** les poids de vernis humide (Δmi) déterminés pendant la production sont visualisés sur un système d'affichage (18) relié au moins par technique de données au système de commande (17).

14. Procédé selon la revendication 12 ou 13, **caractérisé en ce qu'**un signal visuel et/ou acoustique est ou sont émis par le système de commande (17) et/ou par le système d'affichage (18), lorsqu'un poids de vernis humide (Δmi) déterminé se trouve à l'extérieur de la plage de valeurs définie par les valeurs de seuil (mmin ; mmax) fixées.

15. Procédé selon la revendication 10 ou 11 ou 12 ou 13 ou 14, **caractérisé en ce que** l'application du fluide sous pression réalisée avec le système d'application (02) s'effectue unilatéralement ou bilatéralement sur la surface respective des plaques en tôle (04) respectives respectivement sous forme d'un revêtement fermé par rapport à la surface concernée.
